# EUROPÄISCHE PATENTSCHRIFT

(11) **EP 1 470 395 B1**
(45) Veröffentlichungstag und Bekanntmachung des Hinweises auf die Patenterteilung: **24.10.2012**
(21) Anmeldenummer: 03734707.7
(22) Anmeldetag: 28.01.2003
(51) Int. Cl.: G01F 23/284

(54) **VERFAHREN UND VORRICHTUNG ZUM DIREKTEN DIGITALISIEREN VON MIKROWELLENSIGNALEN**
METHOD AND DEVICE FOR THE DIRECT DIGITIZATION OF MICROWAVE SIGNALS
PROCEDE ET DISPOSITIF DE NUMERISATION DIRECTE DE SIGNAUX MICRO-ONDES

(30) Priorität: 28.01.2002 US 58713
(43) Veröffentlichungstag der Anmeldung: 27.10.2004
(73) Patentinhaber: VEGA Grieshaber KG, 77709 Wolfach (DE)
(72) Erfinder: LAUN, Robert, 77756 Hausach (DE)
(74) Vertreter: Preuss, Udo
(86) Internationale Anmeldenummer: PCT/EP2003/000853
(87) Internationale Veröffentlichungsnummer: WO 2003/064978

(56) Entgegenhaltungen:
- DE-A- 4 240 491
- US-A- 5 144 525

## Beschreibung

### Technisches Gebiet

Die vorliegende Erfindung betrifft ein Verfahren sowie ein Füllstandmessgerät, das nach dem Laufzeitprinzip arbeitet und Mikrowellensignale aussendet, mit einer Vorrichtung zum direkten Digitalisieren von an einer Föllgutoberfläche eines in einem Behälter befindlichen Füllgutes reflektierten Mikrowellensignalen. Auf die wesentlichen Merkmale reduziert und damit vereinfacht ausgedrück, werden in einem Follstandmessgerät der genannten Art von einer Sendeeinrichtung Mikrowellensignale (gepulst oder kontinuierlich) erzeugt und über eine Antenne wie beispielsweise eine Horn-, Stab- oder Mikrostripantenne in Richtung der zu messenden Follgutoberfläche abgestrahlt bzw. mit Hilfe eines Wellenleiters (Stab, Kabel oder auch Seil) zur Füllgutoberfläche geleitet. Die an der Füllgutoberflärhe reflektierten Mikrowellensignale - auch allgemein als Echosignale bezeichnet - werden über eine Empfangseinrichtung, die meistens mit der Sendeantenne identisch ist, bzw. mittels dem zuvor genannten Wellenleiter einer Empfangsschaltung zugeführt und abgetastet. Die aus der Abtastung resultierenden Analogwerte werden in Digitalwerte gewandelt und dann einer Auswerteeinrichtung zur Verfügung gestellt. In der Auswerteeinrichtung wird aus den Digitalwerten die Füllstandshöhe ermittelt.

### Hintergrund der Erfindung

Füllstandsmessgedite der eingangs genannten Art, die nach dem Laufzeitprinzip arbeiten und insbesondere Mikrowellensignale aussenden, sind hinlänglich bekannt. So wird beispielsweise auf die DE 42 40 491 A1 verwiesen, in der allgemein eine solche Vorrichtung offenbart ist. Zur Verarbeitung der reflektierten und aufgenommenen Mikrowellensignale sind verschiedene analoge Schaltungen bzw. Bauteile vorhanden, um eine sogenannte Hüllkurve zu erzeugen, die dann digitalisiert wird, um hieraus die Füllstandshöhe zu ermitteln. Die Erzeugung einer Hüllkurve ist hinlänglich bekannt und dementsprechend bedarf es hier keiner weiteren Erläuterungen zu dieser Technik (siehe beispielsweise: DE 44 07 396 C2; M. Scholnick, "Introduction to Radarsystems", zweite Auflage 1980, McGraw-Hill; Peter Devine, "Radar Level Measurement - The User's Guide" VEGA Controlls Ltd., 2000, ISBN 0-9538920-0-X).

Im vorliegenden technischen Gebiet wird mit Mikrowellensignalen gearbeitet, die eine Frequenz von 1 bis 30 GHz oder mehr haben. Aufgrund dieser hohen Frequenzen sind zur Ermittlung der genauen Füllstandshöhe aus den empfangenen Mikrowellensignalen verschiedene analoge Schaltungen bzw. Bauteile notwendig. Insbesondere muss u.a. ein sogenannter Mischer eingesetzt werden, mit dessen Hilfe eine zeitliche "Streckung" der Hüllkurve durchgeführt wird, so dass die Abtastung der Hüllkurve mit üblichen A/D-Wandlern (Taktfrequenzen von etwa 25 Mikrosekunden) bei ausreichender Feinheit des Abtastrasters (zur Erzielung einer ausreichenden Genauigkeit der ermittelten Füllstandshöhe) möglich ist. Das heißt, insbesondere Mikrowellenpulse werden mit Hilfe des Mischers und zugehörigem Oszillator in einen anderen Frequenz- und Zeitbereich transformiert. Hierdurch werden beispielsweise Pulse nach der Zeittransformation etwa um den Faktor 160.000 in der Zeit gedehnt, wodurch eine Pulsdauer von 1 - 2 Nanosekunden vor der Transformation einer Pulsdauer von etwa 160 - 320 Mikrosekunden nach der Transformation entspricht. Diese zeitgedehnten Pulse werden dann dem A/D-Wandler zugeführt, der in einem Abtastraster von ca. 25 Mikrosekunden dieses Signal abtastete. So stehen bei einer Pulslänge von 160 Mikrosekunden somit pro Puls ca. sechs Abtastwerte zur Verfügung. Mit diesen Werten lassen sich Genauigkeiten von ca. 5 mm in der Füllstandshöhenermittlung erreichen. Es ist herauszustellen, dass die Genauigkeit der Füllstandshöhenermittlung auch von der Höhe der Abtastwerte pro Echopuls, von der Steilheit der Pulsflanken und von der Genauigkeit des A/D-Wandlers abhängt.

Zusammenfassend ist festzustellen, dass Vorrichtungen zur Ermittlung der Füllstandshöhe auf der Basis von reflektierten Mikrowellen, insbesondere Mikrowellenpulse, eine analoge Verarbeitung der empfangenen Signale durchführen, um die gewollte Genauigkeit bei der Füllstandshöhenermittlung erzielen zu können. So wird beispielsweise auf die US 6,087,978 A verwiesen, die ein gepulstes Radar-Füllstandmessgerät offenbart, bei dem die Mikrowellensignale mit Hilfe eines Mischers und zugehörigem Oszillator in einen anderen Frequenz- und Zeitbereich transformiert werden, um die Abtastung der Signale und die Digitalisierung der Abtastwerte vornehmen zu können. In der US 5,847,567 A ist ein Füllstandmessgerät beschrieben, das entweder als FMCW-Radargerät oder als gepulstes Radargerät ausgebildet ist. Bei der Ausbildung aus FMCW-Radargerät ist ein Mischer der vorgenannten Art vorhanden, der wohl zur Transformation des Frequenz- und des Zeitbereichs der eingehenden Signale dient. Es erfolgt dann eine Analog-Digital-Umwandlung der Signale. Bei der Ausbildung als gepulstes Radargerät erfolgt in der zuvor beschriebenen Weise eine Transformation mittels einer Zeitschaltung.

Die Verwendung von analogen Bauteilen bzw. analoger Schaltungstechnik ist aber mit Nachteilen behaftet. So müssen bei der Dimensionierung der Schaltung Bauteiltoleranzen und Fertigungsstreuungen der Bauteile berücksichtigt werden und auch bei der Fertigung überwacht werden. Analoge Bauteile weisen ferner Temperaturabhängigkeiten auf, die zu berücksichtigen sind und einen nicht unerheblichen Testaufwand verursachen. Temperaturabhängigkeiten und Bauteiltoleranzen führen zudem zu einer Verminderung der Produzierbarkeit und Genauigkeit der Ausgangssignale und müssen durch zusätzlichen Aufwand minimiert oder kompensiert werden. Ein großer Nachteil ist auch darin zu sehen, dass Änderungen an der Funktionsweise einer derartigen analogen Schaltung nur mit großem Aufwand durchführbar sind. Schließlich sind analoge Schaltungen auch empfindlich für Störeinflüsse.

### Darstellung der Erfindung

Das der Erfindung zugrunde liegende technische Problem besteht somit darin, ein Verfahren und ein Füllstandmessgerät mit einer Vorrichtung bereitzustellen, mit der die Anzahl der analogen Schaltungsbauteite in Vorrichtungen der genannten Art reduzierbar ist und damit die zuvor genannten Nachteile zumindest verringert sind.

Dieses technische Problem wird durch gemäß einem ersten Aspekt der Erfindung durch ein Verfahren zum direkten Digitalisieren von an einer Füllgutoberfläche eines in einem Behälter befindlichen Füllgutes reflektierten Mikrowelleosignalen gelöst, bei dem die an der Füllgutoberfläche reflektierten Mikrowellensignale abgetastet werden und die einzelnen, aus der Abtastung resultierenden Analogwerte in einer Analogwert-Speichereinrichtung abgespeichert werden, wobei abgespeicherte Analogwerte mit einer gegenüber der Abtastrate niedrigeren Rate aus der Analogwert-Speichereinrichtung ausgelesen und in Digitalwerte gewandelt werden, die einer Auswerteeinrichtung zum Ermitteln der Füllstandshöhe zur Verfügung gestellt werden.

Eine bevorzugte Ausführungsform dieses Verfahrens sieht vor, dass die Mikrowellensignale in ihrer Frequenz entweder unverändert oder im Wesentlichen unverändert mit einer hohen Abtastrate abgetastet werden und die durch die Abtastung generierten Analogwerte mit einer der Abtastrate entsprechenden hohen Abspeicherungsrate in einem sogenannten FISO-System abgespeichert werden, und ferner die in dem FISO-System abgespeicherten Analogwerte mit einer gegenüber der Abspeicherungsrate niedrigeren Auslesungsrate aus dem FISO-System ausgelesen und in Digitalwerte gewandelt werden, und diese Digitalwerte wiederum in einer Digitalwert-Speichereinrichtung mit einer der Ausleserate entsprechenden Abspeicherungsrate abgespeichert werden, und schließlich die Auswerteeinrichtung zum Ermitteln der Füllstandshöhe auf die Digitalwert-Speichereinrichtung zum Auslesen der darin abgespeicherten Digitalwerte zugreift.

Als FISO-System (Fast In Slow Out) werden solche Schaltungsanordnungen bezeichnet, die ein schnelles Einlesen von Analogwerten erlauben - also mit sehr hoher Frequenz oder hoher Abtastrate -, und die die Werte langsamer wieder abgeben, so dass ein oder mehrere A/D-Wandler üblicher Bauweise daran angeschlossen werden können. Hier verwendbare FISO-Systeme sind beispielsweise im Grundsatz in der US 5,144,525 A oder US 5,200,983 A offenbart. Eine hier grundsätzlich verwendbare Waveform Digitizer Card wird unter der Bezeichnung "Compuscope 85G" von der Firma GAGE, die zur Tektronix Technology Company gehört, vertrieben. Hierzu ist noch anzumerken, dass von der Firma Tektronix, Inc. in der DE 30 13 253 C2 eine Schaltungsanordnung zur Speicherung und Abgabe von Analogsignalen beschrieben wird. Analogsignale sollen mit einer solchen Schaltungsanordnung schnell erfasst bzw. festgehalten werden können und langsam wieder abgegeben werden können. Damit soll der Vorteil erzielt werden, mit besonders geringen schaltungstechnischem Aufwand Analogsignale schnell zu erfassen bzw. festzuhalten und langsam wieder abgeben zu können, so dass für relativ niedrige Verarbeitungsgeschwindigkeiten ausgelegte Verarbeitungsschaltungen für die Verarbeitung der analogen Signale verwendet werden können. Auch die DE 44 01 346 A1 der Tektronix, Inc. betrifft ein ähnliches System zum verteilen von Abtast- und Halte-Signalen. Hier ist eine Schaltung vorgeschlagen, die ein Datenerfassungssystem mit schneller Ein- und langsamer Ausgabe zur Verfügbarmachung einer redundanten Analogdaten-Erfassungszelle modifiziert. Ein Hinweis auf Füllstandmessgeräte findet sich in beiden zuletzt genannten Druckschriften nicht. Abschließend ist noch die US 4,00,418 zu erwähnen, die eine spezielle Speicheranordnung auf einem Halbleitermaterial betrifft.

Insbesondere ist ein Ausführungsbeispiel eines erfindungsgemäßen Verfahrens vorteilhaft, das gemäß obigen Erläuterungen abläuft, bei dem aber mit Hilfe von mehreren A/D-Wandlern die in der Analogwert-Speichereinrichtung vorhandenen Analogwerte in Digitalwerte gewandelt werden. Die Verwendung mehrerer A/D-Wandler hat den Vorteil, dass die Rate, mit der die Analogwert-Speichereinrichtungen ausgelesen werden muss, ein bisschen höher sein kann als bei der zuvor erläuterten Ausführungsform. Denn dann sind verschiedene Analogwerte an verschiedene A/D-Wandler zu senden. Die A/D-Wandler selbst können dann wiederum mit niedriger Wandelrate betrieben werden, so dass übliche A/D-Wandler hierzu verwendet werden können.

Gemäß einem weiteren Aspekt der Erfindung wird ein Füllstandmessgerät mit einer vorrichtung zum direkten Digitalisieren von an einer Füllgutoberfläche eines in einem Behälter befindlichen Füllgutes reflektierten Mikrowellensignalen vorgeschlagen, die umfasst: eine Empfangsschaltung, in die reflektierte Mikrowellensignale einzuspeisen sind und die zu deren Abtastung mit einer vorbestimmten Abtastrate ausgebildet ist, eine mit der Empfangsschaltung verbundene Analogwert-Speichereinrichtung zum Abspeichern der durch die Abtastung generierten Analogwerte mit einer der Abtastung entsprechenden Abspeicherungsrate, zumindest einen mit der Analogwert-Speichereinrichtung verbundenen A/D-Wandler, der die abgespeicherten Analogwerte in Digitalwerte wandelt, und einer Steuereinrichtung zur Steuerung der Empfangsschaltung, der Analogwert-Speichereinrichtung und des zumindest einen A/D-Wandlers derart, dass die Mikrowellensignale mit der vorbestimmten Abtastrate abgetastet und mit einer der Abtastrate entsprechenden Abspeicherungsrate in der Analogwert-Speichereinrichtung abgespeichert werden, die abgespeicherten Analogwerte aus der Analogwert-Speichereinrichtung mit einer Ausleserate ausgelesen und in dem A/D-Wandler in Digitalwerte gewandelt werden, die niedriger ist als die Abspeicherungsrate, und dass die Digitalwerte einer Auswerteeinrichtung zum Ermitteln der Füllstandshöhe zur Verfügung gestellt werden.

Gemäß noch einem weiteren Aspekt wird eine Vorrichtung zum direkten Digitalisieren von an einer Füllgutoberfläche eines in einem Behälter befindlichen Füllgutes reflektierten Mikrowellensignalen vorgeschlagen, die umfasst: eine Empfangsschaltung, in die reflektierte Mikrowellensignale einzuspeisen sind und die zu deren Abtastung mit einer vorbestimmten Abtastrate ausgebildet ist, eine mit der Empfangsschaltung verbundene Analogwert-Speichereinrichtung zum Abspeichern der durch die Abtastung generierten Analogwerte mit einer der Abtastung entsprechenden Abspeicherungsrate, zumindest einen mit der Analogwert-Speichereinrichtung verbundenen A/D-Wandler, der die abgespeicherten Analogwerte in Digitalwerte wandelt, einer Digitalwert-Speichereinheit, die mit dem A/D-Wandler verbunden ist, um die einzelnen Digitalwerte abzuspeichern, und einer Steuereinrichtung. Die Steuereinrichtung steuert die Empfangsschaltung, die Analogwert-Speichereinrichtung, den zumindest einen A/D-Wandler und die Digitalwert-Speichereinrichtung derart, dass die Mikrowellensignale mit der vorherbestimmten Abtastrate abgetastet und mit einer dieser Abtastrate entsprechenden Abspeicherungsrate in der Analogwert-Speichereinrichtung abgespeichert werden. Ferner wird hierdurch gesteuert, dass die abgespeicherten Analogwerte aus der Analogwert-Speichereinrichtung mit einer Ausleserate ausgelesen und in dem A/D-Wandler in Digitalwerte gewandelt werden, die niedriger ist als die Abspeicherungsrate, und die Digitalwerte in der Digitalwert-Speichereinheit abgespeichert werden. Die nunmehr in der Digitalwert-Speichereinrichtung abgespeicherten Werte stehen dann einer Auswerteeinrichtung zum Ermitteln der Füllstandshöhe zur Verfügung.

Der Erfindung liegt der Gedanke zugrunde, erstmals die eingegangenen Mikrowellensignale nicht mehr mittels eines Mischers zeitlich "zu dehnen", sondern unmittelbar das empfangene, zeitlich "ungedehnte" Mikrowellensignal mittels eines oder mehreren A/D-Wandlern zu digitalisieren. Um die für eine ausreichende Messgenauigkeit erforderliche Abtastraten trotz der nicht erfolgten zeitlichen Dehnung erzielen zu können, und trotzdem eine Digitalwerte-Speichereinrichtung mit handelsüblichen Zugriffszeiten verwenden zu können, ist die spezielle Analogwerte schnell lesende, aber diese Analogwerte langsamer abgebende Analogwert-Speichereinrichtung vorhanden. Durch diese an sich als FISO-System bekannte Einrichtung sind trotz der sehr hohen Frequenzen der "ungedehnten" Mikrowellensignale Abtastraten wie beim Stand der Technik mit Zeitdehnung (mit Hilfe analoger Bauteile) erzielbar. Sobald die entsprechenden Digitalwerte in einer Digitalwerte-Speichereinrichtung abgespeichert sind, erfolgt die Verarbeitung der Digitalwerte und damit die Auswertung in üblicher Weise. Das heißt, die nun aufgrund des nicht mehr vorhandenen Mischers sehr hohen Frequenzen der zu digitalisierenden Signale und damit die notwendigen, sehr hohen Abtastraten werden durch die Verwendung eines FISO-Systems "aufgefangen".

Wird nur ein A/D-Wandler zum Digitalisieren der Mikrowellensignale bzw. der daraus ermittelten Füllkurve verwendet, so ist es u. U. zwecksmäßig, zwischen A/D-Wandler und Endsgeichereinheit mindestens zwei Zwischenspeicher vorzusehen, in die abwechselnd Digitalwerte geschrieben werden. Dadurch ist auch mit üblichen Speicherbauteilen wie SRAM oder DDR-SRAM, die Zykluszeiten von beispielsweise 2,5 - 5 ns haben, die hohe Frequenz des A/D-Wandler nutzbar. Je mehr Zwischenspeicher vorgesehen sind, um langsamer können die verwendeten Speicherbausteine arbeiten.

Somit ist es erfindungsgemäß möglich, trotz der immens hohen Frequenzen der Eingangssignale eine Digitalisierung mit üblichen Bausteinen vorzunehnnen, was die Nachteile analoger Bauteile und insbesondere des bisherigen Mischers behebt

Durch die Verwendung eines FISO-Systems ist es auch erstmals möglich, bisher übliche "langsame" A/D-Wandler einzusetzen.

Eine Vorrichtung zum direkten Digitalisieren gemäß den vorgenannten Erläuterungen kann als einzelne Baueinheit beabstandet von den übrigen Bauteilen eines Füllstandsmessgerätes angeordnet sein. Insbesondere ist es aber zweckmäßig, derartige Vorrichtungen bzw. eine solche Schaltung unmittelbar im Füllstandmessgerät vorzusehen. Diese ist dann vorzugsweise im Gehäuse der Füllstandsmessvorrichtung untergebracht.

### Kurze Beschreibung der Zeichnungen

Im Folgenden sind zur weiteren Erläuterung und zum besseren Verständnis mehrere Ausführungsbeispiele der Erfindung unter Bezugnahme auf die beigefügten Zeichnungen näher beschrieben. Es zeigt:
- Fig. 1: eine schematische Darstellung eines Behälters mit Füllstandmessgerät,
- Fig. 2: eine schematische Darstellung der Elektronikbauteile eines Füllstandmessgerätes gemäß einer Ausführungsform der Erfindung,
- Fig. 3a: ein Detail einer abgewandelten Ausführungsform der Erfindung gemäß der Fig. 2,
- Fig. 3b: ein schematische Darstellung eines Abtastschemas, das in der abgewandelten Ausführungsform der Erfindung gemäß der Fig. 2 ausgeführt wird,
- Fig. 3c: ein schematische Darstellung eines Speicherschemas, das in der abgewandelten Ausführungsform der Erfindung gemäß der Fig. 2 ausgeführt wird,
- Fig. 4: ein Detail einer weiteren abgewandelten Ausführungsform der Erfindung gemäß der Fig. 2 und dazugehöriges Abtast- und Speicherschema,
- Fig. 5: eine schematisierte Darstellung der Elektronikbauteile einer Vorrichtung nach dem Stand der Technik,
- Fig. 6: eine Darstellung eines Mikrowellenpulses,
- Fig. 7: eine Darstellung einer Hüllkurve, und
- Fig. 8: eine Darstellung eines Monopulses.

### Detaillierte Beschreibung von Ausführungsbeispielen

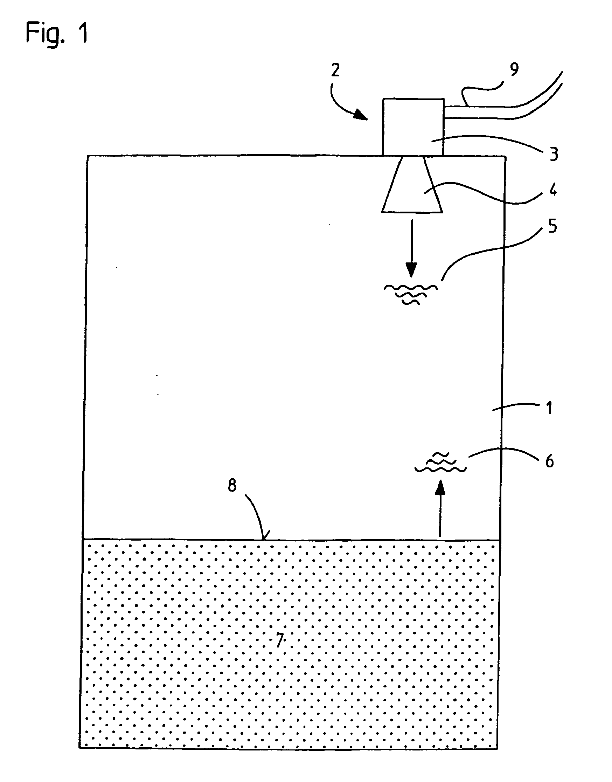

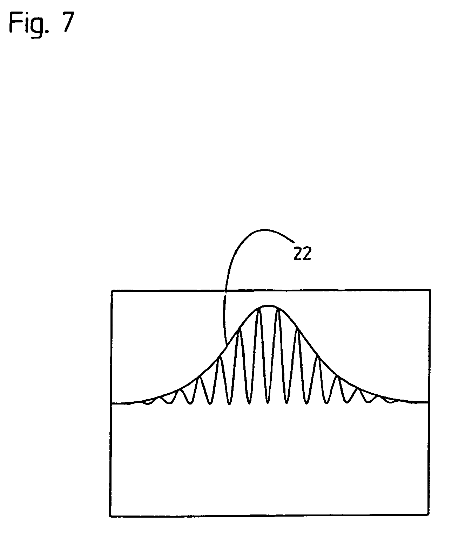

Eingangs wird unter Bezugnahme auf die Fig. 1 und 5 - 8 die prinzipielle Arbeitweise und der prinzipielle Aufbau eines Füllstandmessgerätes erläutert. Wie aus der Fig. 1 ersichtlich ist, ist im Deckenbereich eines Behälters 1 ein Füllstandmessgerät 2 installiert, das aus einer Elektronikeinheit 3 und einer Hornantenne 4 besteht. Das Füllstandmessgerät 2 ist über eine Zweidrahtschleife 9 mit einem entfernt liegenden Steuerstand oder dergleichen verbunden. Über die Zweidrahtschleife 9, die insbesondere als 4 - 20mA-Zweidrahtschleife ausgebildet ist, erfolgt sowohl die Kommunikation als auch die Energieversorgung des Füllstandmessgerätes 2. In der Elektronikeinheit 3 werden Mikrowellenpulse erzeugt und über die Hornantenne 4 in Richtung des im Behälter 1 befindlichen Schüttgutes 7 abgestrahlt. Die Mikrowellenpulse 5 werden an der Schüttgutoberfläche 8 reflektiert und als Echosignal 6 von der Hornantenne 4 wieder aufgefangen.

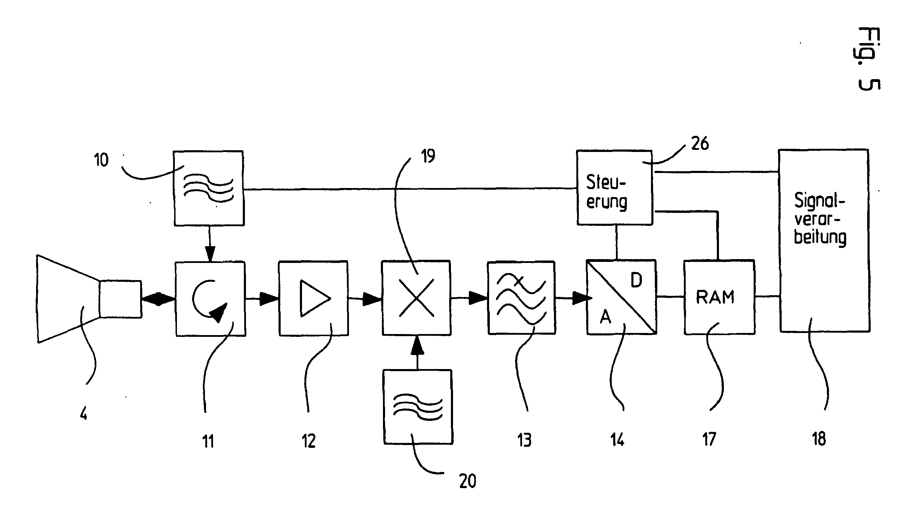

Die Erzeugung von Mikrowellenpulse 5 bzw. von Pulspaketen und die Verarbeitung reflektierter Pulse 6 wird anhand der Fig. 5 - 8 näher beschrieben. Der Mikrowellenpuls wird in einem Pulsgenerator 10 erzeugt und über einen Zirkulator 11 oder über einen Richtkoppler an die Hornantenne 4 weitergeleitet und von dort aus abgestrahlt. Das empfangene Echosignal wird wiederum über den Zirkulator 11 oder Richtkoppler an einen Vorverstärker 12 weitergeleitet, der zur Verstärkung des empfangenen Mikrowellensignals dient. Dem Vorverstärker 12 ist ein Mischer 19 nachgeschaltet, der wiederum mit einem Lokaloszillator 20 verbunden ist. Im Mischer 19 wird das empfangene Echosignal mit dem Festfrequenzsignal des Lokaloszillators 20 vermischt zur Umsetzung des Echosignals in einen tieferen Frequenzbereich (insbesondere kHz-Bereich). Bei dieser Umsetzung wird durch geeignete Abstimmung der Oszillatoren 10 und 20 eine Zeitdehnung des empfangenen Echosignals erreicht; für nähere Details hierzu wird beispielsweise auf die DE 31 07 444 C2 verwiesen.

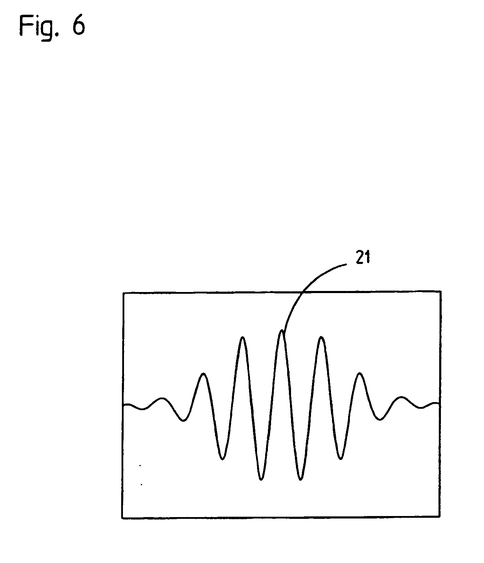

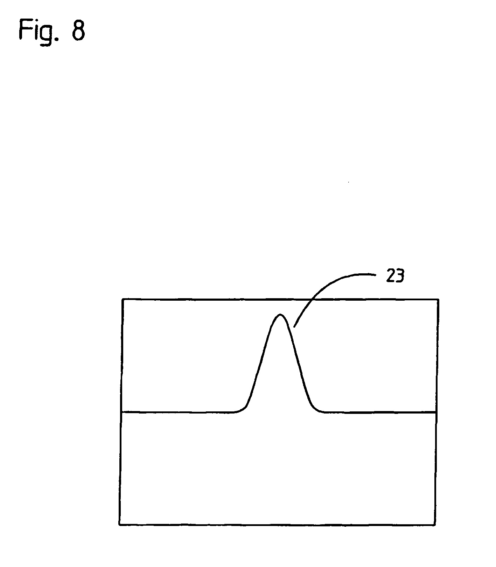

Das Ausgangssignal des Mischers 19, das dem Mikrowellenpulspaket 21 gemäß Fig. 6 oder dem Monopuls 23 gemäß der Fig. 8 entspricht, wird dann durch einen Tiefpassfilter 13 gefiltert und durch einen A/D-Wandler 14 digitalisiert. Durch den Tiefpassfilter 13 wird eine Hüllkurve 22 gemäß der Fig. 8 gebildet. Um dem A/D-Wandler einen größeren Dynamikbereich zur Verfügung zu stellen, kann vor dem A/D-Wandler 14 ein logarithmischer oder steuerbarer Verstärker vorgesehen werden.

Die digitalisierten Werte aus dem A/D-Wandler 14 werden zur weiteren Verarbeitung in einem Speicher 17 gespeichert. Auf diesen Speicher greift eine Signalverarbeitungs- oder Auswerteeinrichtung 18 zu, die hier nicht näher ausgeführt ist, da sie dem Stand der Technik entspricht. Das Starten des A/D-Wandlers 14 und das transferieren der gewandelten Werte in den Speicher 16 übernimmt eine Steuerung 26. Alternativ hierzu kann die Steuerung 26 oder der Pulsgenerator 10 den Startzeitpunkt der Pulsgenerierung und damit den Start des Messvorgangs vorgeben.

Es sei hier noch angemerkt, dass bei bisherigen Ausführungen die Bauteile 14, 17, 18 und 26 meist Bestandteile eines Mikroprozessors sind oder von einem solchen ausgeführt werden. Werden als Sendepulse Pulspakete verwendet, ist vor einer eventuellen Logarithmierung des Signals ein Gleichrichter vorzusehen.

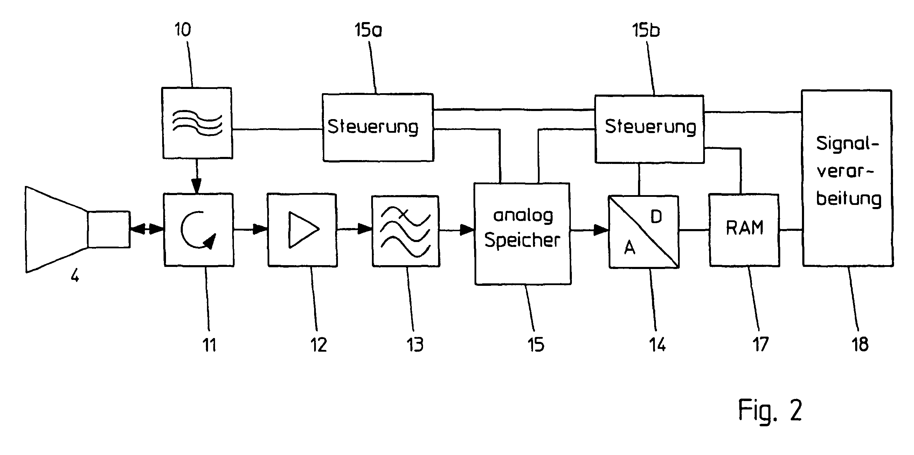

Erfindungsgemäß ist nun entsprechend einer ersten Ausführungsform vorgesehen, den Mischer 19 und den zugehörigen Lokaloszillator 20 wegzulassen; siehe Fig. 2. Bei dieser ersten Ausführungsform ist zwischen dem Tiefpassfilter 13 und dem A/D-Wandler 14 eine Analogwerte-Speichereinrichtung 15 zwischengeschaltet, die als "FISO-System" ausgebildet ist. Das heißt, die über die Bausteine 4, 11, 12, 13 eingelangenden Mikrowellenpulse bzw. Eingangssignale werden "ungedehnt" mit hoher Abtastrate abgetastet und in der Analogwerte-Speichereinrichtung 15 abgespeichert. Über eine Steuerung 15a wird die Analogwerte-Speichereinrichtung 15 so gesteuert, dass dieser mit der für die gewünschte Messgenauigkeit erforderlichen Abtastrate die Eingangssignale abtastet und die entsprechenden gewonnenen Analogwerte abspeichert. Der A/D-Wandler 14 greift auf die Analogwerte-Speichereinrichtung 15 zu und liest die in Digitalwerte zu wandelnden Analogwerte aus der Analogwerte-Speichereinrichtung 15 mit einer Rate aus, die weitaus langsamer ist als die Abtastrate. Damit ist es möglich, den A/D-Wandler 14 trotz der hohen Abtastrate als gewöhnlichen Wandler auszubilden, der keine so hohe Einleserate wie die Analogwerte-Speichereinrichtung 15 hat. Eine weitere Steuerung 15b steuert das Auslesen der Analogwerte aus der Analogwerte-Speichereinrichtung 15 und den A/D-Wandler 14 sowie auch die Speichereinrichtung 17 und die Signalverarbeitungseinrichtung 18. Es sei hier noch angemerkt, dass die Steuerung 15a und 15b auch zusammengefasst sein können, insbesondere auf einem Mikrochip integriert sein können.

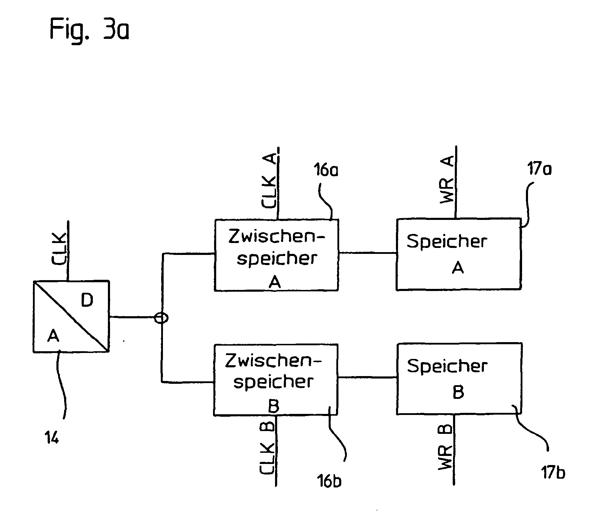

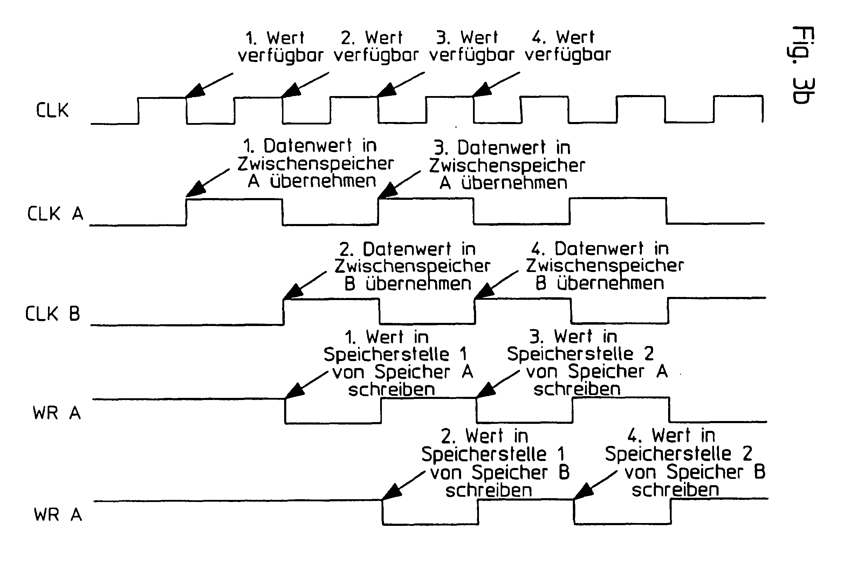

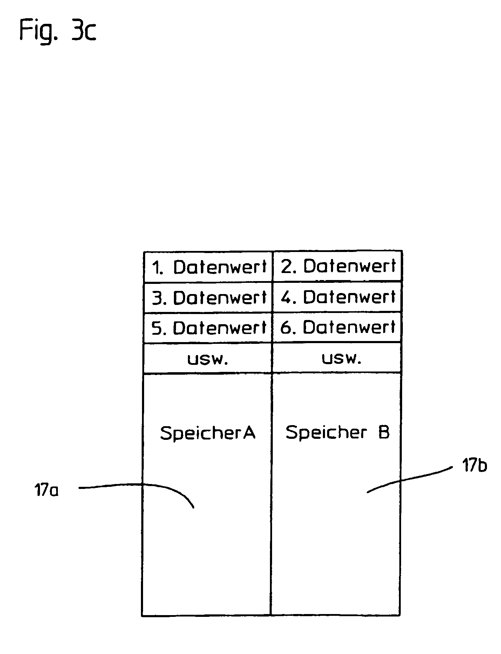

Um die für die gewünschte Messgenauigkeit erforderliche Abtastrate zu erzielen und übliche Speicherbausteine verwenden zu können, ist es auch möglich, den A/D-Wandler 14 mit mehreren Zwischenspeichern 16a, 16b zu verbinden, die wiederum mit der Endspeichereinheit 17 aus mehreren Speicherbausteinen 17a, 17b verbunden sind. Selbstverständlich ist es auch möglich, die Endspeichereinheit 17 für jeden Zwischenspeicher 16a, 16b einzeln vorzusehen, wie es in den Fig. 3a und c dargestellt ist.

Wie in den Fig. 3a-c schematisch dargestellt, wird nun der erste Datenwert im Zwischenspeicher 16a abgespeichert, so steht zur Abspeicherung des nächsten Datenwertes der Zwischenspeicher 16b zur Verfügung. Zur selben Zeit ist bereits vom Zwischenspeicher 16a der gespeicherte Wert in den Endspeicher 17 geschrieben worden, so dass nun für den dritten Datenwert wieder der Zwischenspeicher 16a zur Verfügung steht. Somit sind dann schlussendlich in der Endspeichereinheit 17 bzw. 17a, 17b alle Datenwerte vorhanden. Wenn einzelne Endspeichereinheiten 17a, 17b vorhanden sind, dann ist der erste, dritte und fünfte Datenwert usw. in der Speichereinheit 17a und der zweite, vierte und sechste Datenwert usw. in der Speichereinheit 17b abgespeichert. Beide Endspeichereinheiten 17a ,17b sind wiederum für die Auswerteeinrichtung 18 verfügbar.

Durch die Verwendung eines Monopulses 23 gemäß der Fig. 9 könnte auf den Tiefpassfilter 13 und eine eventuelle Gleichrichtung im Vorverstärker 12 verzichtet werden.

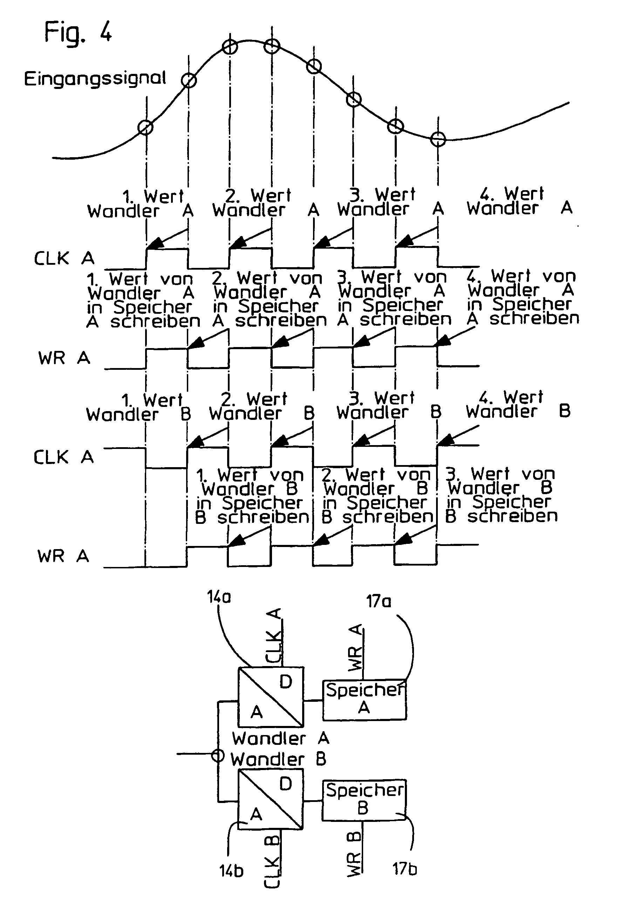

Als Alternative zu der Ausbildung gemäß den Fig. 3a-c ist in der Ausführungsform der Fig. 4 eine mehrere A/D-Wandler 14a, 14b umfassende Vorrichtung verwendbar. Durch die Verwendung von zwei oder mehr A/D-Wandlern kann die Abtastrate erhöht werden.

Die zwei A/D-Wandler 14a und 14b sind jeweils mit einer Endspeichereinheit 17a und 17b verbunden. Der erste Wert des Echosignals wird im A/D-Wandler 14a erfasst und in der Endspeichereinheit 17a abgespeichert. Der nächste Wert wird von dem A/D-Wandler 14b gewandelt und in die zugehörige Endspeichereinheit 17b abgespeichert. Der nächste Wert des Echosignals wird dann wieder vom ersten A/D-Wandler 14a gewandelt. Während die Digitalisierung eines Wertes in einem A/D-Wandler 14a, 14b erfolgt, wird im anderen "Zweig" die Abspeicherung vorgenommen, so dass für den nächsten Takt der andere A/D-Wandler wieder zur Verfügung steht.

Selbstverständlich ist es auch möglich, verschiedene Merkmale der einzelnen beschriebenen alternativen Ausführungsformen der Erfindung miteinander zu kombinieren.

## Patentansprüche

1. Verfahren zum direkten Digitalisieren von an einer Füllgutoberfläche (8) eines in einem Behälter (1) befindlichen Füllgutes (7) reflektierten Mikrowellensignalen (6), bei dem die an der Füllgutoberfläche (8) reflektierten Mikrowellensignale (6) abgetastet werden und die einzelnen, aus der Abtastung resultierenden Analogwerte in einer Analogwert-Speichereinrichtung (15) abgespeichert werden, wobei abgespeicherte Analogwerte mit einer gegenüber der Abtastrate niedrigeren Rate aus der Analogwert-Speichereinrichtung (15) ausgelesen und in Digitalwerte gewandelt werden, die einer Auswerteeinrichtung (18) zum Ermitteln der Füllstandshöhe zur Verfügung gestellt werden.

2. Verfahren nach Anspruch1, wobei die Mikrowellensignale (6) in ihrer Frequenz unverändert abgetastet werden.

3. Verfahren nach Anspruch 1 oder 2, wobei die Mikrowellensignale (6) verstärkt werden, ohne dass deren Frequenz verändert wird, und dann die verstärkten Mikrowellensignale in ihrer Frequenz unverändert abgetastet werden.

4. Verfahren nach einem der voranstehenden Ansprüche, wobei die Digitalwerte in einer Digitalwert-Speichereinrichtung (17) abgespeichert werden, auf die die Auswerteeinrichtung (18) zum Ermitteln der Füllstandshöhe zugreift.

5. Verfahren nach einem der voranstehenden Ansprüche, wobei die Analogwert-Speichereinrichtung (15) ein FISO-System umfasst.

6. Verfahren nach Anspruch 5, wobei die Mikrowellensignale in ihrer Frequenz unverändert mit einer dieser Frequenz entsprechenden hohen Abtastrate abgetastet werden und die durch die Abtastung generierten Analogwerte mit einer der Abtastrate entsprechenden hohen Abspeicherungsrate in dem FISO-System abgespeichert werden, und ferner die in dem FISO-System abgespeicherten Analogwerte mit einer gegenüber der Abspeicherungsrate niedrigeren Auslesungsrate aus dem FISO-System ausgelesen und in Digitalwerte gewandelt werden, und diese Digitalwerte wiederum in einer Digitalwert-Speichereinrichtung (17) mit einer der Ausleserate entsprechenden Abspeicherungsrate abgespeichert werden, und schließlich die Auswerteeinrichtung (18) zum Ermitteln der Füllstandshöhe auf die Digitalwert-Speichereinrichtung (17) zum Auslesen der darin abgespeicherten Digitalwerte zugreift.

7. Verfahren nach Anspruch 1, wobei die Umwandlung der in der Analogwert-Speichereinrichtung (17) abgespeicherten Analogwerte mit Hilfe zumindest eines A/D-Wandlers (14 ; 14a, 14b) erfolgt.

8. Verfahren nach Anspruch 7, wobei der zumindest eine A/D-Wandler (14 ; 14a, 14b) für eine Zeitspanne von 1 ns- 0,5 µs, insbesondere 10 ns-0,3 µs, oder 1 ms-0,5 s, insbesondere 10 ms-0,3 s in Betrieb ist.

9. Verfahren nach einem der voranstehenden Ansprüche, wobei die Umwandlung der in der Analogwert-Speichereinrichtung (17) abgespeicherten Analogwerte mit Hilfe eines einzigen A/D-Wandlers (14) erfolgt, die Digitalwerte aus dem A/D-Wandler (14) in verschiedenen Zwischenspeichern (16a, 16b) abgespeichert werden, und die Digitalwerte aus diesen Zwischenspeichern (16a, 16b) ausgelesen und in der Endspeichereinheit (17) abgespeichert werden.

10. Verfahren nach einem der voranstehenden Ansprüche, wobei die Digitalwert-Speichereinrichtung (17) mehrere Speicherbausteine umfasst.

11. Verfahren nach Anspruch1, wobei die Digitalwert-Speichereinrichtung (17) einen RAM-Speicher umfasst.

12. Verfahren nach einem der Ansprüche 1-8,10 oder 11, wobei abgespeicherte Analogwerte mit einer gegenüber der Abtastrate niedrigeren Rate aus der Analogwert-Speichereinrichtung (15) ausgelesen und mit Hilfe von mehreren A/D-Wandlern (14a, 14b) in Digitalwerte gewandelt werden, die einer Auswerteeinrichtung (18) zum Ermitteln der Füllstandshöhe zur Verfügung gestellt werden.

13. Verfahren nach Anspruch 12, wobei die Digitalwerte der einzelnen A/D-Wandler (14a, 14b) in jedem A/D Wandler zugeordneten Zwischenspeichern abgespeichert werden, aus denen die Digitalwerte ausgelesen und in der Digitalwert-Speichereinrichtung (17) abgespeichert werden.

14. Verfahren nach einem der voranstehenden Ansprüche, wobei das Verfahren in einer Schaltung durchgerührt wird, die in einer Füllstandmesseinrichtung (2) untergebracht ist.

15. Füllstandmessgerät (2), das nach dem Laufzeitprinzip funktioniert und Mikrowellensignale aussendet, umfassend eine Empfangsschaltung, in die reflektierte Mikrowellensignale (6) einzuspeisen sind und die zu deren Abtastung mit einer vorbestimmten Abtastrate ausgebildet ist, eine mit der Empfangsschaltung verbundene Analogwert-Speichereinrichtung (15) zum Abspeichern der durch die Abtastung generierten Analogwerte mit einer der Abtastung entsprechenden Abspeicherungsrate, zumindest einen mit der Analogwert-Speichereinrichtung (15) verbundenen A/D-Wandler (14 ; 14a, 14b), der die abgespeicherten Analogwerte in Digitalwerte wandelt, und einer Steuereinrichtung (15a, 15b ; 26) zur Steuerung der Empfangsschaltung, der Analogwert-Speichereinrichtung (15) und des zumindest einen A/D-Wandlers (14 ; 14a, 14b) derart, dass die Mikrowellensignale (6) mit der vorbestimmten Abtastrate abgetastet und mit einer der Abtastrate entsprechenden Abspeicherungsrate in der Analogwert-Speichereinrichtung (15) abgespeichert werden, die abgespeicherten Analogwerte aus der Analogwert-Speichereinrichtung (15) mit einer Ausleserate ausgelesen und in dem A/D-Wandler (14 ; 14a, 14b) in Digitalwerte gewandelt werden, die niedriger ist als die Abspeicherungsrate, und dass die Digitalwerte einer Auswerteeinrichtung (18) zum Ermitteln der Füllstandshöhe zur Verfügung stehen.

16. Vorrichtung nach Anspruch 15, wobei die Empfangsschaltung eine Verstärkereinrichtung zur Verstärkung der eingespeisten Mikrowellensignale umfasst, wobei die Frequenz der Mikrowellensignale (6) nicht oder nur geringfügig geändert wird.

17. Vorrichtung nach Anspruch 15, ferner aufweisend eine Digitalwert-Speichereinheit (17), die mit dem A/D Wandler (14 ; 14a, 14b) verbunden ist, um die einzelnen Digitalwerte abzuspeichern, wobei die Steuereinrichtung ferner zur Steuerung der Digitalwert-Speichereinheit (17) derart ausgebildet ist, dass die Digitalwerte in der Digitalwert-Speichereinheit (17) abgespeichert werden, so dass die Digitalwerte der Auswerteeinrichtung (18) zum Ermitteln der Füllstandshöhe zur Verfügung stehen.

18. Vorrichtung nach Anspruch 17, wobei zwischen dem A/D-Wandler (14 ; 14a, 14b) und der Digitalwert-Speichereinheit (17) ein oder mehrere Zwischenspeichereinrichtungen geschaltet sind.

19. Vorrichtung nach einem der Ansprüche 15-18, wobei der zumindest eine A/D-Wandler (14 ; 14a, 14b) für eine Zeitspanne von 1 ns- 0,5 µs, insbesondere 10ns - 0, 3 µs, weiter insbesondere 1 ms-0,5 s oder 10 ms-0,3 s in Betrieb ist.

20. Vorrichtung nach Anspruch 17, wobei die Digitalwert-Speichereinrichtung (17) einen RAM-Speicher umfasst.

21. Füllstandmessgerät nach Anspruch 15, wobei das Füllstandmessgerät (2) an eine Zweidrahtschleife anschließbar ist, über die sowohl die Energieversorgung als auch die Kommunikation erfolgt.

22. Füllstandmessgerät nach Anspruch 15 oder 21, wobei die Zweidrahtschleife eine 4-20mA Zweidrahtschleife ist.

## Claims

1. A method for directly digitizing microwave signals (6) reflected on a filling product surface (8) of a filling product (7) present in a container (1), wherein the microwave signals (6) reflected on the filling product surface (8) are sampled, and the individual analog values resulting from the sampling process are stored in an analog value storage device (15), the stored analog values being read-out from the analog value storage device (15) using a lower rate as compared to the sampling rate, and are converted into digital values, which are provided to an evaluation device (18) for determining the filling level height.

2. The method of claim 1, wherein
the microwave signals (6) are sampled unchanged in the frequency thereof.

3. The method of claim 1 or 2 wherein,
the microwave signals (6) are amplified without the frequency thereof being changed, and the amplified microwave signals are then sampled unchanged in the frequency thereof.

4. The method of one of the preceding claims, wherein
the digital values are stored in a digital value storage device (17), to which accesses the evaluation device (18) for determining the filling level height.

5. The method of one of the preceding claims, wherein
the analog value device (15) comprises a FISO system.

6. The method of claim 5, wherein
the microwave signals are sampled unchanged in the frequency thereof using a high sampling rate corresponding to said frequency and the analog values generated by the sampling process are stored in the FISO system using a high storing rate corresponding to said sampling rate, and the analog values stored in the FISO system are further read-out from said FISO system at a lower read-out rate as compared to the storing rate, and are converted into digital values, and said digital values are in turn stored in a digital value storage device (17) using a storing rate corresponding to the read-out rate, and the evaluation device (18) for determining the filling level height finally accesses the digital value storage device (17) for reading out the digital values stored therein.

7. The method of claim 1, wherein
the conversion of the analog values stored in the analog value storage device (17) is carried out by means of at least one A/D converter (14; 14a, 14b).

8. The method of claim 7, wherein
the at least one A/D converted (14; 14a, 14b) is operational for a time span of 1 ns - 0.5 µs, in particular for 10 ns - 0.3 µs or 1 ms - 0.5s in particular for 10 ms - 0.3s.

9. The method of one of the preceding claims, wherein
the conversion of the analog values stored in the analog value storage device (17) is carried out by means of one single A/D converter (14), the digital values from the A/D converter (14) are stored in various buffers (16a, 16b), and the digital values are read out from said buffers (16a, 16b) and stored in the end-storage unit (17).

10. The method of one of the preceding claims, wherein
the digital value storage device (17) comprises a plurality of storage components.

11. The method of claim 1, wherein
the digital value storage device (17) comprises a RAM memory.

12. The method of one of claims 1 - 8, 10 or 11, wherein
stored analog values are read-out from the analog value storage device (15) using a lower rate as compared to the sampling rate, and are converted into digital values by means of a plurality of A/D converters (14a, 14b), which values are provided to an evaluation device (18) for determining the filling level height.

13. The method of claim 12, wherein
the digital values of the individual converters (14a, 14b) are stored in buffers allocated to each A/D converter, from which buffers the digital values are read out and stored in the digital value storage device (17).

14. The method of one of the preceding claims, wherein
the method is executed in a circuit accommodated in a filling level measuring device (2).

15. A filling level measuring device (2) working on the transit time principle and emitting microwave signals, comprising a reception circuit into which the reflected microwave signals (6) are to be fed in, and which is adapted for sampling said signals using a predetermined sampling rate, an analog value storage device (15) connected with the reception circuit for storing the analog values generated by the sampling process using a storing rate corresponding to the sampling process, at least one A/D converter (14; 14a, 14b) connected with the analog value storage device (15), converting the stored analog values into digital values and a control device (15a, 15b; 26) for controlling the reception circuit, the analog value storage device (15) and the at least one A/D converter (14; 14a, 14b) in such a manner that the microwave signals (6) are sampled using the predetermined sampling rate, and are stored in the analog value storage device (15) using a storing rate corresponding to the sampling rate, that the stored analog values are read out from the analog value storage device (15) using a read-out rate and are converted into digital values in the A/D converter (14; 14a, therein the read-out rate is lower than the storage rate, and that the digital values are provided to an evaluation device (18) for determining the filling level height.

16. The device of claim 15, wherein
the reception circuit comprises an amplifying device for amplifying the fed in microwave signals, wherein the frequency of the microwave signals (6) is not or is only slightly changed.

17. The device of claim 15,
further comprising a digital value storage unit (17) connected with the A/D converter (14; 14a, 14b) for storing the individual digital values, wherein the control device is further adapted for controlling the digital value storage unit (17) in such a manner that the digital values are stored in the digital value storage unit (17), so that the digital values are available to the evaluation device (18) for determining the filling level height.

18. The device of claim 17, wherein
one or a plurality of buffer are connected between the A/D converter (14; 14a, 14b) and the digital value unit (17).

19. The device of one of claims 15 - 18, wherein
the at one A/D converter (14; 14a, 14b) is operational for a time span of 1 ns - 0.5 µs, in particular 10 ns - 0.3 µs, further in particular 1 ms - 0.5s or 10 ms - 0.3s.

20. The device of claim 17, wherein
the digital value storage device (17) comprises a RAM memory.

21. The level measuring of claim 15, wherein
the filling level measuring device (2) is to a two-wire loop, via which the energy supply as well as the communication is made.

22. The filling level measuring device of claim 1 or 21, wherein
the two-wire loop is a 4-20mA two-wire loop.

## Revendications

1. Procédé destiné à la numérisation directe de signaux micro-ondes (6), réfléchis sur une surface (8) de produit de remplissage (7) situé dans un réservoir (1), procédé dans lequel les signaux micro-ondes (6), réfléchis sur la surface (8) du produit de remplissage, sont balayés et les valeurs analogiques individuelles, résultantes du balayage, sont mémorisées dans un dispositif de mémorisation (15) de valeurs analogiques, les valeurs analogiques mémorisées étant lues du dispositif de mémorisation (15) de valeurs analogiques avec un débit plus faible que le taux de balayage et étant converties en valeurs numériques, qui sont transmises à un dispositif d'évaluation (18) pour la détermination du niveau de remplissage.

2. Procédé selon la revendication 1, dans lequel les signaux micro-ondes (6) sont balayés sans changement dans leur fréquence.

3. Procédé selon l'une des revendications 1 et 2, dans lequel les signaux micro-ondes (6) sont amplifiés, sans que leur fréquence ne soit modifiée, puis les signaux micro-ondes amplifiés sont balayés sans changement dans leur fréquence.

4. Procédé selon l'une des revendications précédentes, dans lequel les valeurs numériques sont mémorisées dans un dispositif de mémorisation (17) de valeurs numériques, auxquel accède le dispositif d'évaluation (18) pour la détermination du niveau de remplissage.

5. Procédé selon l'une des revendications précédentes, dans lequel le dispositif de mémorisation (15) de valeurs analogiques comprend un système FISO.

6. Procédé selon la revendication 5, dans lequel les signaux micro-ondes sont balayés, sans changement dans leur fréquence, avec un taux de balayage élevé correspondant à cette fréquence et les valeurs analogiques, générées par le balayage, sont mémorisées dans le système FISO avec un débit de mémorisation élevé correspondant au taux de balayage, et les valeurs analogiques, mémorisées dans le système FISO, sont en outre lues du système FISO avec un débit de lecture plus faible que le taux de balayage et converties en valeurs numériques, et ces valeurs numériques sont pour leur part mémorisées dans un dispositif de mémorisation (17) de valeurs numériques avec un débit de mémorisation correspondant au débit de lecture, et le dispositif d'évaluation (18), destiné à la détermination du niveau de remplissage, accède enfin au dispositif de mémorisation (17) de valeurs numériques pour la lecture des valeurs mémorisées dans ce dernier.

7. Procédé selon la revendication 1, dans lequel la conversion des valeurs analogiques, mémorisées dans le dispositif de mémorisation (17) de valeurs analogiques, s'effectue à l'aide d'au moins un convertisseur analogique/numérique (14 ; 14a, 14b).

8. Procédé selon la revendication 7, dans lequel le au moins un convertisseur analogique/numérique (14 ; 14a, 14b) est en service pour un laps de temps de 1 ns - 0, 5 µs, en particulier de 10 ns - 0,3 µs, ou de 1 ms - 0,5 s, en particulier de 10 ms - 0,3 s.

9. Procédé selon l'une des revendications précédentes, dans lequel la conversion des valeurs analogiques, mémorisées dans le dispositif de mémorisation (17) de valeurs analogiques, s'effectue à l'aide d'un convertisseur analogique/numérique (14) unique, les valeurs numériques sont mémorisées du convertisseur analogique/numérique (14) dans différentes mémoires intermédiaires (16a, 16b), et les valeurs numériques sont lues de ces mémoires intermédiaires (16a, 16b) et mémorisées dans l'unité de mémorisation finale (17).

10. Procédé selon l'une des revendications précédentes, dans lequel le dispositif de mémorisation (17) de valeurs numériques comprend plusieurs modules de mémoire.

11. Procédé selon la revendication 1, dans lequel le dispositif de mémorisation (17) de valeurs numériques comprend une mémoire RAM.

12. Procédé selon l'une des revendications 1 - 8, 10 et 11, dans lequel les valeurs analogiques mémorisées sont lues du dispositif de mémorisation (15) de valeurs analogiques avec un débit plus faible que le taux de balayage et converties en valeurs numériques à l'aide de plusieurs convertisseurs analogique/numérique (14a, 14b), lesquelles valeurs sont transmises à un dispositif d'évaluation (18) pour la détermination du niveau de remplissage.

13. Procédé selon la revendication 12, dans lequel les valeurs numériques des convertisseurs analogique/numérique individuels (14a, 14b) sont mémorisées dans des mémoires intermédiaires associées à chaque convertisseur analogique/numérique, à partir desquelles sont lues les valeurs numériques et mémorisées dans le dispositif de mémorisation (17) de valeurs numériques.

14. Procédé selon l'une des revendications précédentes, dans lequel le procédé est mis en oeuvre dans un circuit logé dans un dispositif de mesure de niveau (2).

15. Appareil de mesure de niveau (2), qui fonctionne suivant le principe de la durée de propagation et émet des signaux micro-ondes, comprenant un circuit de réception, dans lequel peuvent être injectés les signaux micro-ondes (6) réfléchis et qui est réalisé pour le balayage de ces derniers avec un taux de balayage prédéfini, un dispositif de mémorisation (15) de valeurs analogiques relié au circuit de réception, pour la mémorisation des valeurs analogiques, générées par le balayage, avec un débit de mémorisation correspondant au balayage, au moins un convertisseur analogique/numérique (14; 14a, 14b), relié au dispositif de mémorisation (15) de valeurs analogiques, qui convertit les valeurs analogiques mémorisées en valeurs numériques, et un dispositif de commande (15a, 15b; 26) pour le contrôle du circuit de réception, du dispositif de mémorisation (15) de valeurs analogiques et de le au moins un convertisseur analogique/numérique (14; 14a, 14b), de telle sorte que les signaux micro-ondes (6) sont balayés avec le taux de balayage prédéfini et mémorisés dans le dispositif de mémorisation (15) de valeurs analogiques avec un débit de mémorisation correspondant au taux de balayage, les valeurs analogiques mémorisées sont lues du dispositif de mémorisation (15) de valeurs analogiques et converties en valeurs numériques dans le convertisseur analogique/numérique (14; 14a, 14b) avec un taux de balayage plus faible que le débit de mémorisation, et les valeurs numériques sont transmises à un dispositif d'évaluation (18) pour la détermination du niveau de remplissage.

16. Dispositif selon la revendication 15, dans lequel le circuit de réception comprend un dispositif d'amplification pour amplifier les signaux micro-ondes injectés, la fréquence des signaux micro-ondes n'étant pas ou n'étant que légèrement modifiée.

17. Dispositif selon la revendication 15, comprenant en outre une unité de mémorisation (17) de valeurs numériques, reliée au convertisseur analogique/numérique (14; 14a, 14b), pour la mémorisation des valeurs numériques individuelles, le dispositif de commande étant en outre réalisé pour le contrôle de l'unité de mémorisation (17) de valeurs numériques de telle sorte que les valeurs numériques sont mémorisées dans l'unité de mémorisation (17) de valeurs numériques, si bien que les valeurs numériques sont transmises au dispositif d'évaluation (18) pour la détermination du niveau de remplissage.

18. Dispositif selon la revendication 17, dans lequel un ou plusieurs dispositifs de mémorisation intermédiaires sont montés entre le convertisseur analogique/numérique (14; 14a, 14b) et l'unité de mémorisation (17) de valeurs numériques.

19. Dispositif selon l'une des revendications 15 - 18, dans lequel le au moins un convertisseur analogique/numérique (14; 14a, 14b) est en service pour un laps de temps de 1 ns - 0,5 µs, en particulier de 10 ns - 0,3 µs, plus particulièrement de 1 ms - 0,5 s ou 10 ms - 0,3 s.

20. Dispositif selon la revendication 17, dans lequel le dispositif de mémorisation (17) de valeurs numériques comprend une mémoire RAM.

21. Appareil de mesure de niveau selon la revendication 15, dans lequel l'appareil de mesure de niveau (2) peut être raccordé à une boucle bifilaire, à travers laquelle s'effectue aussi bien l'alimentation en énergie que la communication.

22. Appareil de mesure de niveau selon l'une des revendications 15 et 21, dans lequel la boucle bifilaire est une boucle de 4 - 20 mA.
